Europäisches Patentamt

European Patent Office

Office européen des brevets

(11) Publication number: **0 089 773**
A1

## EUROPEAN PATENT APPLICATION

(21) Application number: 83301226.3

(22) Date of filing: 08.03.83

(51) Int. Cl.³: **F 16 K 15/08**
**F 04 B 39/10**

(30) Priority: 18.03.82 CA 398791

(43) Date of publication of application:
28.09.83 Bulletin 83/39

(84) Designated Contracting States:
AT BE CH DE FR GB IT LI LU NL SE

(71) Applicant: IIC MECHANICAL PRODUCTS LIMITED
364 Supertest Road
Downsview, Ontario, Canada M3J 2J2(CA)

(72) Inventor: Chuen-Ha, Sum
67 Fulbert Crescent
Scarborough Ontario(CA)

(74) Representative: Collingwood, Anthony Robert et al,
GEORGE FUERY & COMPANY Whitehall Chambers 23
Colmore Row
Birmingham B3 2BL(GB)

(54) Channel valve.

(57) Valve apparatus having a valve body (10), openings (16) formed through the valve body for flow of fluid, movable valve closure means (30) adapted to move towards and away from the valve body, and registering with the opening means to close the same, and movable to open the same, guide means (22) engaging the movable closure means, a damper recess means formed in one of the closure means and the guide means, and interfitting damper recess means, formed on the other of the closure means and the guide means, and valve spring means engaging said closure means.

FIG 1

EP 0 089 773 A1

1.

DESCRIPTION

CHANNEL VALVE

The invention relates to self-actuating valve
structures such as are used for controlling the flow of
fluids, and is of particular interest for use in association with self-actuating compressor valves.

Self-actuating valves are designed to operate,
to either open or close, at predetermined pressure differentials across the valve. Such valves have many
applications, a typical example being that of a gas
compressor. Examples of such valves are shown in U.S.
Letters Patent 3,536,094, and in Canadian Letters Patent
1,058,130.

In the operation of compressors, for example, the
efficiency of the valve is the critical controlling
factor in the overall efficiency of operation. The valve
should preferably offer as little as possible resistance
to the free flow of gas therethrough, when it is open.
It should also open and close at a predetermined pressure
differential, in a smooth graduated fashion, so as to
reduce inefficiencies caused by, for example, unwanted
movements of the movable valve members, excessive impacting
of the valve members on the fixed portions of the valve
structure which can cause damage and wear, and in addition, a smooth, progressive operation of the valve members is desirable to reduce turbulence, and pressure surges in the system.

In the designs of prior art valves, little attention has been paid to these factors. The movable valve members are either linear members, or annular members, formed of metal or plastic, and operated by springs, so as to remain closed, until a predetermined overpressure is reached at which point they then open. Little or no attempt has been made, however, to regulate or damp the movement of the valve members between one position and the other, with the result that in some circumstances it is possible for the valve members to open or close so fast that they become damaged, and in other cases a rapid opening and closing or fluttering effect may take place, causing unwanted resistance to gas flow, and causing in some circumstances pressure surges.

In addition, gas flow around such movable valve members which takes place at extremely high velocities, is subject to severe turbulence which is substantially influenced by the design of the movable members and the fixed portions of the valve. In order to optimize gas flow through the valve, it is highly desirable to provide for the greatest possible aerodynamic efficiency, and this has seldom been achieved in the past.

It is therefore a general objective of the invention to provide a valve for controlling the flow of fluids wherein flow of fluids through the valve when open is subject to reduced resistance, and wherein the movement of the movable valve members during closing and opening is damped.

In order to achieve the foregoing and other objectives, the invention comprises valve apparatus having valve body means, openings formed through said valve body means for flow of fluid therethrough, movable valve closure means adapted to move towards and away from said valve body means, and registering with said opening means whereby to close the same when in contact with said valve body means, and being movable to open the same, guide means engaging said movable closure means, for guiding same during such movement, said guide means having a predetermined width dimension corresponding to the width dimension of said closure means, a damper recess means formed in one of said closure member and said guide means, and interfitting damper ridge means dimensioned to be received within said damper recess means, formed on the other of said closure means and said guide means, valve spring means fitting within said damper recess means, and normally urging said closure member into engagement with said valve body means.

The invention further comprises fluid guiding surfaces formed on said closure member for guiding flow of fluid therearound, and complementary fluid guide surfaces formed on said valve body means on either side of said opening means, for cooperating with said flow guiding surfaces on said closure means, whereby to optimize fluid flow through said opening means.

The invention further comprises as a related objective the provision of a valve closure member formed of integral one-piece thermoplastic construction, having a lower valve closure portion of generally V-shape in section, and having an upper guide portion with parallel side walls, extending along the length of said valve closure portion, and projecting beyond each end thereof, and a continuous regular damper recess channel formed therealong, having parallel side walls, and a bottom wall normal extending from end to end thereof.

The invention further comprises as a related objective

4.

the provision of a valve closure member of annular shape having a lower valve closure portion having a generally V-shape in section, and having a valve guide portion with generally parallel outer side walls extending upwardly from said valve closure portion, and there being a annular damper recess channel formed therein around the full extent thereof, having parallel side walls and a bottom wall normal thereto.

The various features of novelty which characterize the invention are pointed out with particularity in the claims annexed to and forming a part of this disclosure. For a better understanding of the invention, its operating advantages and specific objects attained by its use, reference should be had to the accompanying drawings and descriptive matter in which there are illustrated and described preferred embodiments of the invention.

Figure 1 is a perspective partially cut-away illustration of a typical valve according to the invention;

Figure 2 is a section along the line 2-2 of Figure 1;

Figure 3 is an exploded perspective illustration of the valve closure member according to the invention;

Figure 4 is a side elevation of the valve closure member of Figure 3;

Figure 5 is a bottom plan view of the valve closure member of Figure 3;

Figure 6 is a greatly enlarged section along the line 6-6 of Figure 1;

Figure 7 is a top plan view of an alternate form of the invention showing an annular valve;

Figure 8 is a section along the line 8-8 of Figure 7;

Figure 9 is a perspective illustration of an annular valve closure member for the valve of Figures 7 and 8, and

Figure 10 is an enlarged perspective illustration, corresponding to Figure 6, showing details of an alternate embodiment.

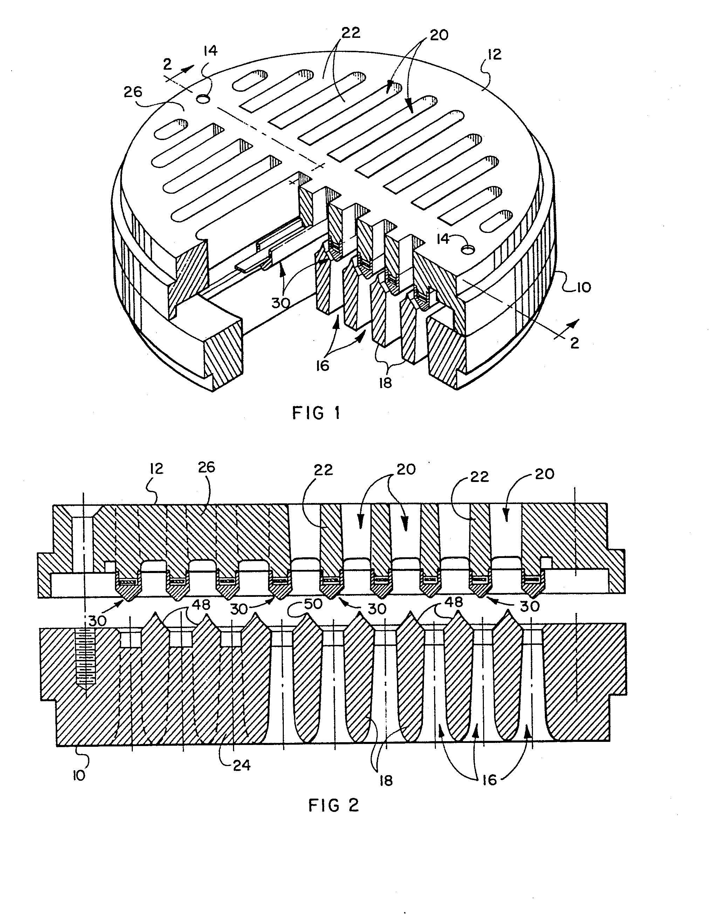

As best shown in Figures 1 and 2, a typical valve according to the invention will comprise a lower valve body portion 10, and an upper guard portion 12. Typically, the two portions 10 and 12 are held together, for example, by screw fastening means such as 14. In certain cases, such separate fastening means can be omitted, and the two halves of the valve may be held together by clamps or any other suitable means.

The valve body portion 10 is provided with a plurality of linear spaced apart fluid flow channels 16, defined by spaced apart valve seat bar portions 18.

The upper guard portion 12 is formed with a plurality of spaced apart fluid flow passageways 20, defined by spaced apart closure guide bars 22.

Depending upon the size of the valve, transverse support ribs 24 and 26 may be provided in the two valve portions 10, although in smaller sizes these may not be necessary.

As shown in Figure 2, it will be noted that such spaced apart support bars or braces 24 and 26 have a profile which is cut away in relation to the depth of bars 18 and 22, so as to avoid interfering with the operation of the movable valve closure members as described below.

It will be noted that the bars 22 register with the openings 16, so that fluid typically being gas or the like flowing through opening 16, will be forced to divide and pass on either side of bars 22.

Separate individual valve closure members indicated generally as 30 in Figure 1, are provided for each openings 16.

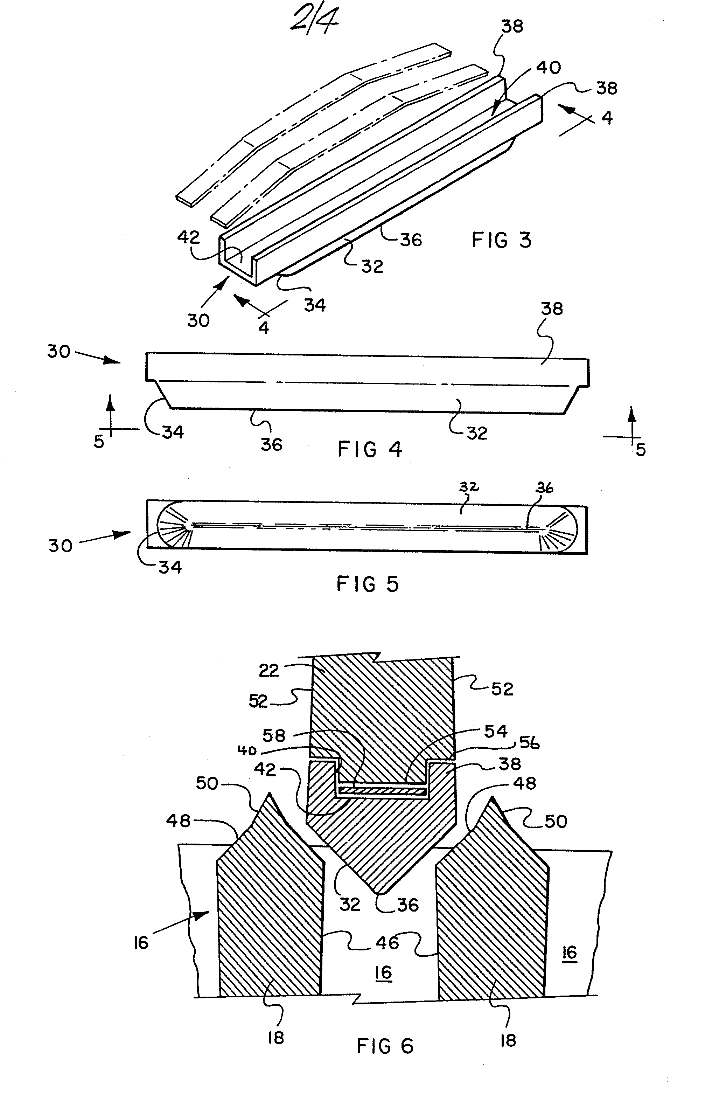

These are shown in more detail in Figures 3 to 6.

6.

The valve closure members 30 will be seen to comprise a lower valve closure portion 32, having generally V-shaped side walls, and having generally semi-conical inwardly tapering end walls 34 at each end, and tapering downwardly to a generally central leading edge 36. An upper wall closure portion is defined by outer parallel side walls 38, forming a central damper recess channel 40 and having a flattened bottom wall 42. The bottom wall 42 and side walls 38 extend outwardly at each end of the lower valve closure portion 32 for purposes to be described.

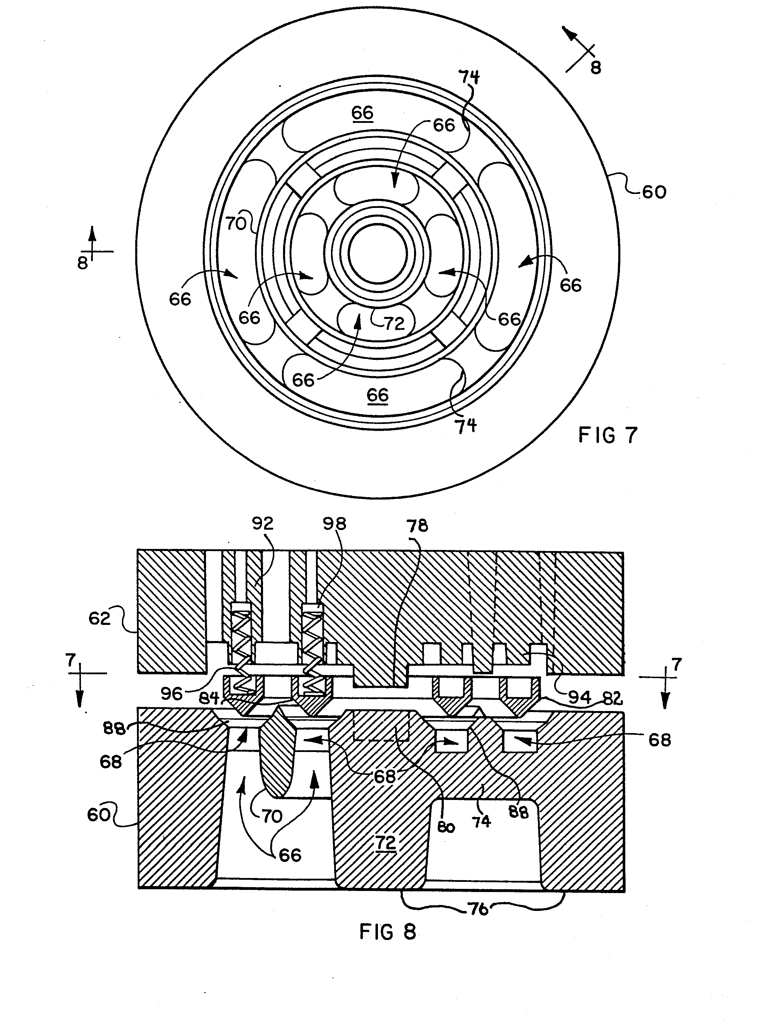

The seating bars 18 defining the edges of openings 16 are shown in more detail in Figure 6. It will be seen that they comprise generally parallel side walls 46, on opposite sides of channel 16, and angled valved seat surfaces 48, which are angled at the same angle as the V-shaped surfaces of valve closure portion 32 of closure member 30. In this way the valve will seat over a relatively substantial surface area, and make a good seal, while at the same time reducing the unit surface pressure, to avoid excessive wear during extended usage.

An upward extension 50 of valve seat surfaces 48 extends upwardly on either side of closure member 30. It will be noted that upward extension 50 forms an angle relative to the angle of seat surfaces 48, which is more acute with relation to the surfaces of side walls 46 of bars 18 and also relative to the side walls of valve guide portion 38. Upward extensions 50 in this way act to guide and control the flow of fluid around closure member 30, and as far as possible minimize pressure surges and turbulence.

Individual closure members 30 are themselves supported on guide bars 22 of guard portion 12. Guide bars 22 have side walls 52 which are essentially parallel spaced apart surfaces, being spaced apart the same distance as the side

7.

walls 38 of the upper closure portion, so as to permit smooth unrestricted flow of fluids therearound.

Damper ridge portions 54 are formed at the lower extremities of guide bars 22, which are shaped and adapted to be received within damper channels 40 of upper closure portions.  Shoulders 56 engage the upwardly directed edges of the side walls 38 of member 30.

Any suitable valve spring, such as the leaf springs 58, are located in damper recesses 40, and engage ridge members 54.  Springs 58 normally urge the closure member 30 down into contact with the seats 48, thereby closing off the opening 16.

In order to as far as practicable, optimize the gas flow around the lower closure portions 32  and upper closure portions 38, the valve seat surfaces 48, and upward extensions 50, are provided with angled surfaces which meet at an obtuse angle, such that the upward extensions 50 deflect and guide gases flowing in a generally upward manner around the closure member 30, and side walls 52 of guide bars 22.

Such gas flow is further facilitated by giving the closure members 30 the same transverse dimension as the dimension between such side walls 52, so as to reduce and ·minimize turbulence in the fluid flow.

The invention is also applicable to the so-called annular type of valve.  Such an embodiment is shown in Figures 7, 8, and 9.  In this form of the invention an annular lower valve body portion 60 cooperates with an upper guard portion 62, and may be fastened by means such as screws (not shown) ,or clamps (not shown) or other means  .  well known in the art.

8.

A plurality of generally arcuate gas flow passageways 66 are arranged, located around a generally annular path, and such passageways may form essentially a single ring, or two or more such rings, depending upon the design and dimensions of the particular valve. In the present embodiment two such rings of passageways 66 are shown, although it would be appreciated that the valve could operate with only one such ring, or with three or more.

Annular channels 68 register with passageways 66, forming continuous annular grooves for purposes to be described. A ring-shaped bearing member 70 is located between the two annular grooves 68, to provide seating for the closure members as described below. A central core member 72 is located coaxially with respect to bearing member 70, and both core member 72 and bearing member 70 are supported in the embodiment shown, by spoke-like radial arms 74 extending from the core member 72 through the ring bearing member 70, and joining the main body portion 60.

It will be noted from Figure 8 that the core member 72 and the main body or outer portion 60 all terminate on a common lower plain as at bearing surfaces 76, so that these members may be supported on a common supporting portions (not shown) of the assembly into which they are installed, typically, for example, a compressor.

The upper portion 62 of this type of annular valve will likewise have a central core 78, shaped to abut with the upper recess 80 of core 72, thus providing support throughout the central portion of the valve.

In order to open and close the annular grooves 68, annular valve ring members 82 and 84 are provided, there being two such members in this embodiment. It will of course be appreciated that the number of such ring valve members will be dependent on the number of such grooves in the valve, and this will depend upon the size and design of the valve. When viewed in section, the profile of such ring members 82 - 84 is similar to the section as shown in Figure 6 of the closure member 30. Thus the closure members 82, 84 will be seen to be provided with angled lower surfaces 86, seating in corresponding valve seat surfaces 88 of groove 68. An annular channel 90 is formed in the upwardly directed portion of each of closure members 82 - 84. Annular valve control bars 92 formed on upper guard portion 62 have damper ridges 94 which fit within channels 90. Suitable springs such as coil springs 96 are located in recesses 98, so as to urge the closure members 82 into engagement with the valve seats 88, while any tendency towards oscillations or rapid fluttering movements of the closure members which might otherwise occur, is damped down by entrapping air between the ridges 94 and the channels 90.

It will also be observed that the surfaces around the valve seats 88, of the annular groove 68, are formed aerodynamically, so as to provide guidance and control for the flow of gases passing therethrough, and thus reduce as far as possible the development of turbulence at this point.

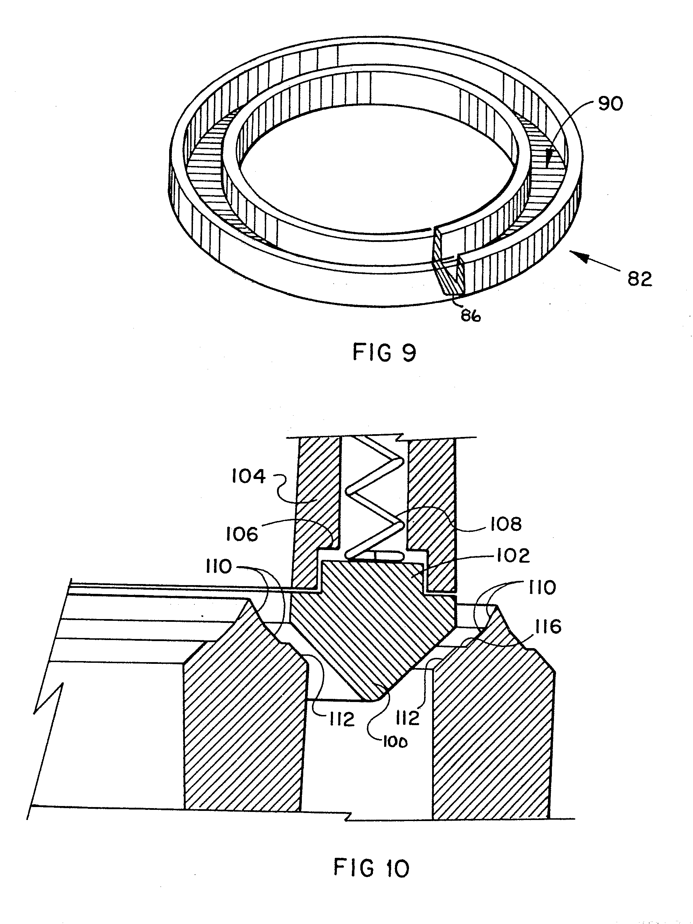

As best shown in Figure 10, variations can be made on both the design of the closure members and valve control bars, and also on the design of the aerodynamic flow control surfaces.

The embodiment in Figure 10 may be considered either as a section corresponding to Figure 6 of a linear valve closure member, or as a section of an annular valve closure member as shown in Figure 8. In either case, in this embodiment, a modified form of closure member 100 can be provided with a valve control ridge 102, of essentially reduced width. The bar portion 104 of the

10.

of the upper guard member 12 or 62 will be provided with a suitable valve guiding channel 106 for closely engaging the control ridge 102. Valve spring 108 is provided engaging ridge 102 in channel 106.

This will provide guidance, and entrapment of air to ensure the damping action, in essentially the same manner as disclosed above.

Figure 10 also illustrates optional modified aerodynamic air guide surfaces 110, shown around valve seats 112. Such modified air guide surgaces are formed with two separately angled surface portions, meeting at an obtuse angle, which may in some circumstances provide a more efficient action, and ensure greater gas flow control. A flattened shelf 116 joins seat 112 with surfaces 110.

In operation, both forms of the invention operate in essentially the same manner.

When fluid pressure within the valve body 10 reaches a predetermined differential over the fluid pressure in guard 12, or in the corresponding members of the embodiment of Figures 7 and 8, then the valve closure members 30 will raise or "lift off" and fluid will flow through the passageways 16, and upwardly through the openings 20 in guard 12.

When the pressure differential drops once more, the springs will force the valve closure members 30 to drop downwardly and close.

However, it will be appreciated that due to the damping effect of the damper recesses, and ridge members, excessively rapid movements of the valve closure member 30 in either opening or closing will be controlled and slowed down so that in fact the opening and closing

11.

movement takes place in a controlled smooth manner, thereby reducing as far as possible fluctuations in pressure and turbulence.

At the same time, turbulence of fluid flow around the closure members 30 is as far as possible reduced by the contoured surfaces of the valve seats 48 and guide portions 50, and at the same time by the smooth profile exhibited by the outer surfaces of the side walls 38 of the closure members 30 and the side walls 52 of the control bars 22.

It will of course be appreciated that the embodiment of Figure 10 will operate in the same way, and requires no separate description.

The foregoing is a description of a preferred embodiment of the invention which is given here by way of example only. The invention is not to be taken as limited to any of the specific features as described, but comprehends all such variations thereof as come within the scope of the appended claims.

12.

CLAIMS

1. Valve apparatus having valve body means 10, openings 16 formed through said valve body means 10 for flow of fluid therethrough, movable valve closure means 30 adapted to move towards and away from said valve body means 10, and registering with said openings 16 whereby to close the same when in contact with said valve body means 10, and being movable to open the same, and wherein the improvement comprises; guide means 22 engaging said closure means 30, for guiding same during such movement; damper recess means 42 formed in one of said closure means 30 and said guide means 22; interfitting damper ridge means 54 formed on the other of said closure means 30 and said guide means 22 dimensioned to be received within said damper recess means, and, valve spring means normally urging said closure member 30 into engagement with said valve body means 10, movement of said closure member 30 being controlled by interengagement between said damper recess means 42 and said damper ridge means 54 whereby to reduce rapidity of such movement.

2. Valve apparatus as claimed in Claim 1 wherein said damper recess means 42 is formed on said closure member 30, and wherein said damper ridge means 54 is formed on said guide means 22.

3. Valve apparatus as claimed in Claim 2 including a valve guard portion 12 adapted to be associated with said valve body means 10, and wherein said guide means 22 are formed integrally with said valve guard portion 12, and including opening means 20 in said valve guard portion 12 for passage of fluids therethrough.

4. Valve apparatus as claimed in Claim 3 including valve seating surfaces 48 formed on said valve body means 10 adjacent said openings 16 therethrough, said valve closure

13.

means 30 being movable into and out of engagement with said valve seating means 48, and wherein said valve seating means 30 is formed, in section, in at least two separate planes 48 - 50, located at angles to one another.

5. Valve apparatus as claimed in Claim 4 wherein said valve closure means 30 is formed with seating surfaces 32, formed in section, in planes located at angles to one another, said planes being adapted to seat with the planes 48 of one portion of said valve seating means.

6. Valve apparatus as claimed in Claim 5 wherein said valve closure means 30 are a plurality of separate elongated linear members.

7. Valve apparatus as claimed in Claim 5 wherein said valve closure means are at least one annular valve closure member 80 - 82.

FIG 1

FIG 2

FIG 3

FIG 4

FIG 5

FIG 6

0089773

FIG 7

FIG 8

0089773

FIG 9

FIG 10

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,A | DE-C- 633 613 (INGERSOLL-RAND) <br> * Claims 1, 2; figure 1 * | 1-4,6 | F 16 K 15/08 <br> F 04 B 39/10 |
| | --- | | |
| A | US-A-1 550 376 (VAN DUZER LONGACRE) <br> * Page 3, lines 6-13; figures 1, 5 * | 1,2,7 | |
| | --- | | |
| A | DE-A-1 550 480 (RATELBAND) | | |
| | --- | | |
| A | US-A-1 608 616 (PRELLWITZ) | | |
| | --- | | |
| D,A | US-A-3 536 094 (MANLEY) | | |
| | ----- | | |

|  |
|---|
| TECHNICAL FIELDS SEARCHED (Int. Cl. 3) |
| F 16 K 15/00 <br> F 04 B 39/00 |

| The present search report has been drawn up for all claims |
|---|

| Place of search <br> BERLIN | Date of completion of the search <br> 01-06-1983 | Examiner <br> SCHLABBACH M |
|---|---|---|